# EUROPÄISCHE PATENTSCHRIFT

(11) **EP 1 462 363 B1**
(45) Veröffentlichungstag und Bekanntmachung des Hinweises auf die Patenterteilung: **01.02.2006**
(21) Anmeldenummer: 04002103.2
(22) Anmeldetag: 31.01.2004
(51) Int. Cl.: B64D 25/02, B60R 22/00, A42B 3/04

(54) **Anordnung zur Positionierung der Schultergurte eines Sicherheitsgurts in Längsrichtung der Schenkel eines U-förmigen Schulterjochs**
System for positioning the shoulder belts of a safety belt in longitudinal direction of the legs of a U-shaped yoke
Système de positionnement pour les ceintures thoraciques d'un système de ceinture de sécurité dans la direction longitudinale des branches d'un joug

(30) Priorität: 28.03.2003 DE 10314423
(43) Veröffentlichungstag der Anmeldung: 29.09.2004
(73) Patentinhaber: Schroth Safety Products GmbH, 59757 Arnsberg (DE)
(72) Erfinder: Schroth, Carl-Jürgen, 59494 Soest (DE)
(74) Vertreter: Bockermann, Rolf

(56) Entgegenhaltungen:
- US-A- 6 009 566

## Beschreibung

Die Erfindung betrifft eine Anordnung zur Positionierung der längenverstellbaren Schultergurte eines Sicherheitsgurts in Längsrichtung der Schenkel eines dem Oberkörper eines Fahrzeuginsassens formschlüssig angepassten U-förmigen Schulterjochs gemäß den Merkmalen im Oberbegriff des Patentanspruchs 1.

Aufgrund der immer höheren Geschwindigkeiten im KFZ-Rennsport, insbesondere im Formel-Rennsport, sind bei Unfällen mit einem Aufprall eines Rennwagens auf eine Rennstreckenbegrenzung oder beim Zusammenstoß zweier Rennwagen in den letzten Jahren verstärkt Kopf- und Nackenverletzungen, teils mit Todesfolge, teils mit Querschnittslähmungen, aufgetreten. Diese Unfallfolgen werden insbesondere deshalb publik, weil andere Verletzungen durch die Verbesserung der diversen Schutzeinrichtungen, wie z.B. Sicherheitsgurte, Sportbekleidung und Sicherheitshelme, in der Relation stark rückläufig sind.

Aus diesen Erkenntnissen heraus hat die Fachwelt Kopf- und Nackenrückhaltesysteme entwickelt, die gezielt dazu dienen, den Kopf eines Rennfahrers bei einem Aufprall seines Fahrzeugs auf ein stehendes oder fahrendes Hindernis so zurück zu halten, dass der Kopf nicht auf das Lenkrad oder auf andere Cockpitteile schlagen kann. Diese unter dem Kurzbegriff HANS (Head and Neck Support) bekannt gewordenen Kopf- und Nackenrückhaltesysteme sind beispielsweise in den US-PS'n 4,638,510 und 6,009,566 beschrieben. Sie bestehen jeweils aus einem formsteifen U-förmigen Schulterjoch aus Kunststoff mit zwei Schenkeln und einem die Schenkel verbindenden hochgestellten Nackenkragen. An diesen Nackenkragen sind seitlich Haltebänder angebracht, die mit dem Sicherheitshelm des Rennfahrers verbunden werden. In den Haltebändem sind Bandlose vorgesehen, um dem Rennfahrer begrenzte Kopfbewegungen während des Rennens zu ermöglichen.

Hinter dem Rennfahrer sind zwei Schultergurte eines Sicherheitsgurts an der Rückwand des Cockpits fixiert und über die Schenkel des Schulterjochs zu einem brustseitig des Rennfahrers befindlichen Zentralverschluss des Sicherheitsgurts geführt. Die den Schultergurten zugewandten Oberflächen der Schenkel sind so gestaltet, dass sie Relativbewegungen der Schultergurte einen vergleichsweise großen Friktionswiderstand entgegensetzen. Sind die längenveränderbaren Schultergurte gestrammt, wird das an den Oberkörper des Rennfahrers formschlüssig angepasste Schulterjoch zwischen dem Oberkörper und den Schultergurten eingeklemmt.

Im Crashfall taucht der Oberkörper infolge seines Beharrungsvermögens in Beschleunigungsrichtung in die Schultergurte ein, wobei jedoch das Schulterjoch durch die Friktion mit den Schultergurten im wesentlichen in seiner ursprünglichen Lage verbleibt und sich relativ zum Oberkörper verlagert. Infolge dessen vergrößert sich der Abstand zwischen dem Nackenkragen und dem sich in Beschleunigungsrichtung bewegenden Sicherheitshelm. Dies führt wiederum dazu, dass die Haltebänder gestrammt werden. Demzufolge wird der Kopf an einer weiteren Vorverlagerung relativ zum Oberkörper gehindert. Ein Aufprall des Kopfes auf das Lenkrad oder andere Teile des Cockpits wird vermieden. Die Kopf- und Nackenbelastungen jeglicher Art des Rennfahrers nehmen deutlich ab.

Bei Hubschrauberunfällen treten im Wesentlichen senkrechte Verzögerungen auf, die nur bedingt durch eine vorwärts gerichtete Verzögerung überlagert werden. Häufig jedoch kippt der Hubschrauber teilweise seitlich weg, bevor er auf den Boden aufschlägt. Die früher durch den vertikalen Schlag aufgetretenen Verletzungsmuster der unteren Wirbelsäule sind durch die in den letzten Jahren erfolgreich entwickelten Sitze mit vertikal wirkenden Energiewandlem zurückgedrängt worden. Dadurch treten jetzt aber verstärkt Verletzungen, teilweise mit Todesfolge, durch Abknicken des Kopfes bis zum Aufschlag des Kinns auf das Brustbein auf. Besonders kritisch wird dies bei Besatzungen von Militärhubschraubern, da diese Sicherheitshelme mit Gewichten von fast 2 kg tragen. Die Situation kann durch den Einbau von Airbags verbessert werden. Solche Systeme erfordern aber den Eingriff in die Struktur der Hubschrauberzelle, aufwendige Sensoriken und Überwachungssysteme. Die Kosten und das extra Gewicht lassen eine verbreitete Anwendung zur Zeit kaum realistisch erscheinen. Eine einfache und wirkungsvolle Lösung des Problems kann auch hier ein HANS-System für die Insassen bieten.

Ein Nachteil der Benutzung des HANS-Systems ergibt sich aber daraus, dass die eigentlich für ein körpemahes Tragen entwickelten Schultergurte eines Sicherheitsgurts auf den Schenkeln des Schulterjochs liegen, so dass sie zum Körper des Insassen distanziert sind. Mithin tendieren die Schultergurte prinzipiell dazu, seitlich von den Schenkeln zu rutschen, weil sie bestrebt sind, sich den kürzesten Weg von der Fixierung an der Rückwand eines Cockpits oder einer Sitzstruktur hinter dem Nackenkragen zum brustseitigen Zentralverschluss des Sicherheitsgurts zu suchen.

Um diesen Nachteil zu beheben, hat man vorgeschlagen, die Verankerungspunkte der Schultergurte hinter dem Nackenkragen näher zusammen zu legen. Auch wurden gemäß einem weiteren Vorschlag Gurtbänder für die Schultergurte eingesetzt, die nicht breiter als die Breite der Schenkel des Schulterjochs bemessen waren. Ferner wurde durch eine bestimmte Formgebung der Schultergurte gemäß dem Vorschlag der DE 101 14 343 Al eine Verbesserung der Lage der Schultergurte angestrebt.

Der Erfindung liegt - ausgehend vom Stand der Technik - die Aufgabe zugrunde, eine Anordnung zur Positionierung der Schultergurte auf den Schenkeln eines U-förmigen Schulterjochs eines HANS-Systems zu schaffen, welche ohne Beeinträchtigung der notwendigen Bewegungsfreiheit eines Insassens eines Rennwagens oder eines Hubschraubers das seitliche Abgleiten der Schultergurte auch bei längsgerichteten Relativbewegungen der Schultergurte zu den Schenkeln wirksam verhindert.

Diese Aufgabe wird mit den im kennzeichnenden Teil des Patentanspruchs 1 angegebenen Merkmalen gelöst.

Demgemäß sind nunmehr die einander zugewandten Flachseiten der Schenkel des Schulterjochs und der Schultergurte zumindest bereichsweise so strukturiert, dass sich die Schultergurte zwar in Längsrichtung der Schenkel bewegen können, jedoch eine Querverlagerung der Schultergurte relativ zu den Schenkeln unterbunden wird. Die Schultergurte verbleiben auf den Schenkeln.

Femer ist mit solchen Strukturierungen der Vorteil verbunden, dass keine dauerhafte Verbindung der Schultergurte mit dem Schulterjoch zustande kommt, weil die Schultergurte jederzeit von dem Schulterjoch abgenommen werden können, um einem Insassen ein schnelles Verlassen eines Fahrzeugs (Rennwagen bzw. Hubschrauber) zu ermöglichen. Dennoch darf die Friktion zwischen den Schultergurten und den Schenkeln auch bei Nässe nicht verloren gehen.

Die Strukturierungen können direkt an den Schultergurten und an den Schenkeln ausgebildet sein. Denkbar sind aber auch solche Ausführungsformen, bei welchen die Strukturierungen an gesonderten Bauteilen ausgebildet sind, die dann ihrerseits an den Schultergurten oder an den Schenkeln festgelegt werden.

Da sich die Piloten und Co-Piloten in Hubschraubern im Einsatz wegen erforderlicher Rundumsicht im Gegensatz zu stramm in einem Rennwagen festgezurrten Fahrern stark bewegen, ist die erfindungsgemäße Führung der Schultergurte von essentieller Bedeutung, um ein HANS-System auch in einem solchen Anwendungsfall nutzbar zu machen.

Eine vorteilhafte Ausführungsform der Erfindung wird in den Merkmalen des Patentanspruchs 2 erblickt. Danach sind die Strukturierungen an den Schultergurten und an den Schenkeln des Schulterjochs aus mindestens einem Längswulst an einer ihrer Seiten und aus einer an den Querschnitt des Längswulstes angepassten Längsnut an der jeweils gegenüberliegenden Seite gebildet. Die Längswulste greifen in die Längsnuten ein und sichern eine einwandfreie Relativverlagerung der Schultergurte zu den Schenkeln, verhindern jedoch, dass die Schultergurte sich quer zu den Schenkeln bewegen können.

Entsprechend den Merkmalen im Patentanspruch 3 können die Strukturierungen aus in kanalartige Vertiefungen der Schenkel des Schulterjochs eingebettete Flachleisten mit mehreren parallel nebeneinander verlaufenden 1. Längswulsten und 1. Längsnuten sowie aus an den Schultergurten in gegengleicher Konfiguration vorgesehenen 2. Längswulsten und 2. Längsnuten gebildet sein. Die Anordnung mehrerer 1. Längswulste und 1. Längsnuten an den Schenkeln, die dann mit den 2. Längsnuten und 2. Längswulsten an den Schultergurten verzahnungsartig zusammenwirken, führt zu einer verbesserten Zwangsführung der Schultergurte auf den Schenkeln bei noch stärkerer Sicherheit gegen eine Querverlagerung. Die 1. Längswulste und 1. Längsnuten sind vorzugsweise unmittelbar an den Flachleisten ausgebildet. Diese können in die kanalartigen Vertiefungen der Schenkel insbesondere eingeklebt sein.

Der Formschluss der Schultergurte mit den Schenkeln wird mit den Merkmalen des Patentanspruchs 4 noch mehr verbessert.

Vorstellbar ist aber auch eine Ausführungsform entsprechend Patentanspruch 5. Danach sind die Strukturierungen an den Schultergurten und an den Schenkeln sägezahnförmig gestaltet, welche sich miteinander verkrallen, ohne dass eine begrenzte Längsbewegung eingeschränkt wird. Eine von der vertikalen Mittellängsebene des Schulterjochs weg gerichtete Verlagerung der Schultergurte wird hiermit einwandfrei verhindert.

Die Ausführungsform des Patentanspruchs 6 sieht Strukturierungen vor, bei denen in kanalartige Vertiefungen der Schenkel des Schulterjochs Flachleisten mit jeweils einer mittigen Längsnut eingebettet sind. An den Schultergurten sind dann Längswulste vorgesehen, die den Längsnuten angepasst sind.

Eine andere sinnvolle Ausführungsform der Erfindung wird in den Merkmalen des Patentanspruchs 7 erblickt. Danach sind an den Schultergurten im Querschnitt dreieckförmige Leisten mit mittigen Längsnuten vorgesehen. Die Dicke der Leisten ist in den vertikalen Mittellängsebenen der Schultergurte am größten und nimmt zu den Rändern der Schultergurte hin ab. Wenn dann beim Anlegen des Sicherheitsgurts die Schultergurte über die Schenkel gestrammt werden, ziehen sich die Bereiche der Leisten neben den omegaförmig konfigurierten Längswulsten um diese formschlüssig herum und bewirken dadurch eine innige Verklammerung, die sofort wieder aufgehoben wird, wenn die Schultergurte entlastet werden, so dass dann die Schultergurte auch leicht von dem Schulterjoch getrennt werden können.

Eine weitere vorteilhafte Ausführungsform der Erfindung ist in den Merkmalen des Patentanspruchs 8 gekennzeichnet. Auch mit Hilfe derartiger Beflockungen kann der jeweils gewünschte Kraftschluss erreicht werden. Dieser kann dann durch die Stärke, Länge und Dichte der Fasern in den jeweils angestrebten Grenzen variiert werden. Da üblicherweise eine sehr kurze Ausführung der Fasern von etwa 1 mm Länge zum Tragen kommt, können die Schultergurte im entlasteten Zustand problemlos vom Schulterjoch gelöst werden.

Nach den Merkmalen des Patentanspruchs 9 sind die Fasern an den Schenkeln auf in kanalartige Vertiefungen der Schenkel eingebetteten Flachleisten vorgesehen. Die Fasern an den Schultergurten können direkt auf diese aufgebracht sein.

Unter Anwendung der Merkmale im Patentanspruch 10 kann, insbesondere liegenden, Positionen von Rennfahrern in Cockpits Rechnung getragen werden, wie sie in Formel-Rennwagen existieren. Da in solchen Positionen die Unterkanten der Sicherheitshelme wenigstens teilweise in den mittleren Längenbereichen der Schenkel auf den Schultergurten liegen, werden in diesen Bereichen keine Strukturierungen vorgesehen. Es bestehen dann auch keine Probleme, bei Bedarf die Schultergurte von den Schenkeln entfernen zu können.

Es ist in diesem Zusammenhang von Vorteil, wenn gemäß Patentanspruch 11 die Länge der Strukturierungen an den Schultergurten kürzer als die Länge der Strukturierungen an den Schenkeln bemessen ist.

Um ein schienenartiges Gleiten der Strukturierungen an den Schultergurten auf den Strukturierungen an den Schenkeln sicher zu stellen, können gemäß Patentanspruch 12 die Endabschnitte der Strukturierungen an den Schultergurten geneigt, d.h. rampenartig, ausgebildet sein.

Nach Patentanspruch 13 können die Strukturierungen an den Schenkeln durch Strangpressprofile aus Gummi oder Kunststoff gebildet sein. Diese werden dann in insbesondere kanalartigen Vertiefungen der Schenkel festgelegt, vorzugsweise eingeklebt.

Die Strukturierungen an den Schultergurten bestehen zweckmäßigerweise aus angespritztem Kunststoff (Patentanspruch 14).

Denkbar ist es aber auch, dass die den Schultergurten zugeordneten Strukturierungen an Profilsträngen vorgesehen werden, die gemäß Patentanspruch 15 mit den Schultergurten vernäht werden.

Schließlich ist es gemäß Patentanspruch 16 noch vorstellbar, dass die Strukturierungen an Profilsträngen vorgesehen werden, die mit den Schultergurten verklebt werden.

Die Erfindung ist nachfolgend anhand von in den Zeichnungen dargestellten Ausführungsbeispielen näher erläutert. Es zeigen:
- Figur 1: in der Perspektive ein HANS-System mit Sicherheitshelm;
- Figur 2: in der Seitenansicht im Schema einen Rennfahrer in einem Cockpit eines Rennwagens mit angelegtem HANS-System und aufgesetztem Sicherheitshelm in einer Fahrposition;
- Figur 3: in schematischer Seitenansicht die Darstellung der Fig. 2 bei einem Frontalcrash;
- Figur 4: im Querschnitt sowie in der Perspektive die Zuordnung eines Schultergurts zu einem Schenkel eines U-förmigen Schulterjochs des HANS-Systems gemäß einer ersten Ausführungsform in schematischer Explosionsdarstellung;
- Figur 5: eine Darstellung ähnlich derjenigen der Fig. 4 gemäß einer zweiten Ausführungsform;
- Figur 6: die Darstellung der Figur 5 im gestrammten Zustand des Schultergurts;
- Figur 7: eine Darstellung ähnlich derjenigen der Figur 4 entsprechend einer dritten Ausführungsform;
- Figur 8: eine Darstellung ähnlich derjenigen der Figur 4 entsprechend einer vierten Ausführungsform;
- Figur 9: eine Darstellung ähnlich derjenigen der Figur 4 entsprechend einer fünften Ausführungsform;
- Figur 10: die Darstellung der Figur 9 im gestrammten Zustand des Schultergurts;
- Figur 11: eine Darstellung ähnlich derjenigen der Figur 1 gemäß einer weiteren Ausführungsform;
- Figur 12: eine Ansicht auf die Unterseite eines Schultergurts der Anordnung der Figur 11;
- Figur 13: eine Teilseitenansicht auf den Schultergurt der Figur 12 in Richtung der Pfeils XIII gesehen;
- Figur 14: einen Querschnitt durch die Darstellung der Figur 12 entlang der Linie XIV-XIV in Richtung der Pfeile XIVa gesehen und
- Figur 15: eine Darstellung ähnlich derjenigen der Figur 2 in Verbindung mit der Ausführungsform der Figuren 11 bis 14.

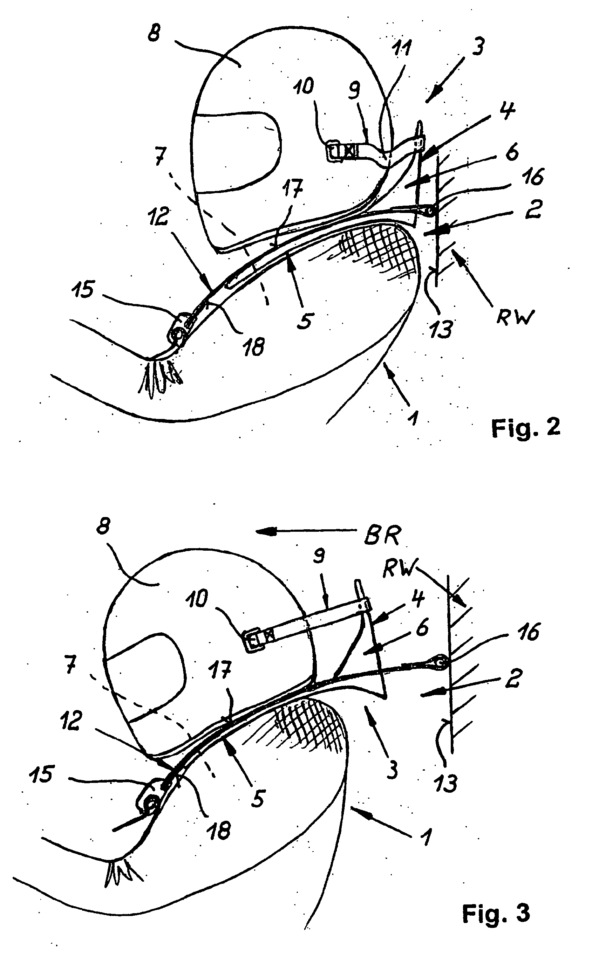

In den Figuren 2 und 3 ist mit 1 ein Rennfahrer in einem Cockpit 2 eines Formel-Rennwagens RW schematisch angedeutet. Der Rennfahrer 1 trägt ein Kopf- und Nackenrückhaltesystem in Form eines HANS-Systems 3.

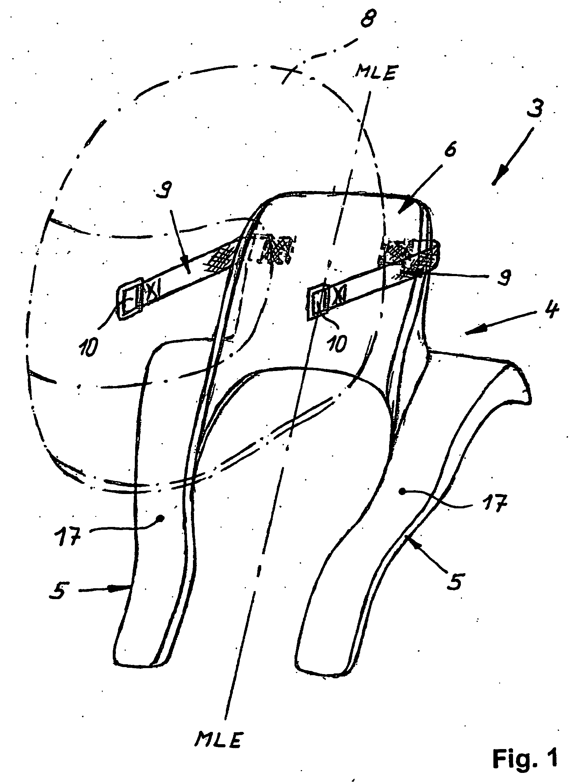

Dieses HANS-System 3 (siehe auch Figur 1) umfasst ein U-förmiges Schulterjoch 4 mit zwei Schenkeln 5 und einem die Schenkel 5 verbindenden hochgestellten Nackenkragen 6. Das Schulterjoch 4 besteht aus Kunststoff. Es ist den Konturen des Oberkörpers 7 des Rennfahrers 1 formschlüssig angepasst.

Der Rennfahrer 1 trägt einen Sicherheitshelm 8, der über seitliche Haltebänder 9 des HANS-Systems 3 mit dem Nackenkragen 6 verbunden wird. Die Haltebänder 9 sind an dem Sicherheitshelm 8 durch Clipse 10 lösbar befestigt.

In der Fahrposition gemäß Figur 2 sind die Haltebänder 9 so zwischen dem Nackenkragen 6 und dem Sicherheitshelm 8 angeordnet, dass sie Bandlose 11 aufweisen. Dadurch sind begrenzte Kopfbewegungen des Rennfahrers 1 relativ zum HANS-System 3 möglich.

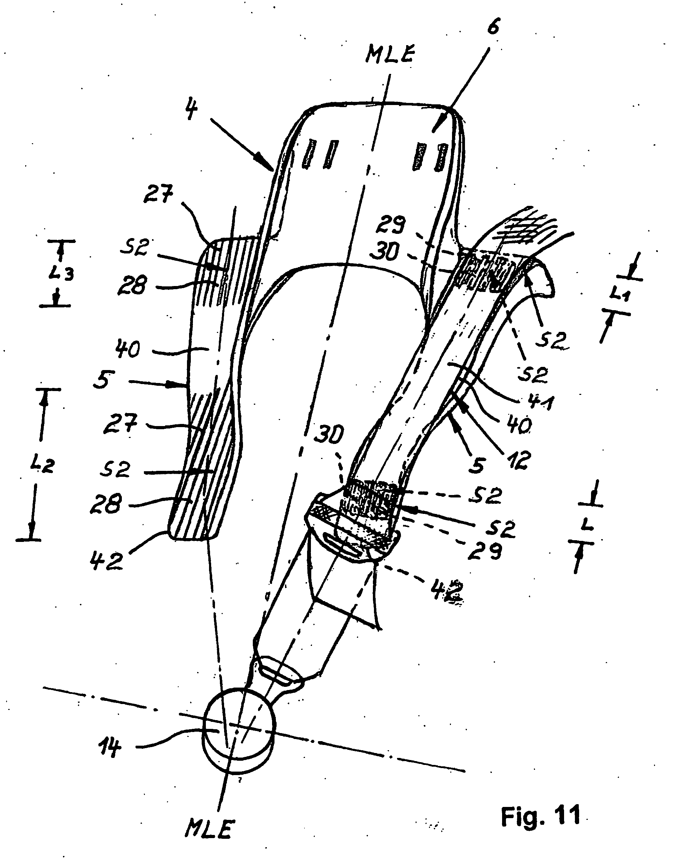

Zur Lagefixierung des Rennfahrers 1 im Cockpit 2 dient ein nicht näher dargestellter Sicherheitsgurt mit zwei textilen Schultergurten 12. Diese Schultergurte 12 sind hinter dem Nackenkragen 6 an der Rückwand 13 des Cockpits 2 befestigt und erstrecken sich über die Schenkel 5 des Schulterjochs 4. Die Schultergurte 12 sind brustseitig des Rennfahrers 1 in einem Zentralverschluss 14 des Sicherheitsgurts zusammengeführt, so wie er aus Figur 11 erkennbar ist. In die Schultergurte 12 sind Längenverstellungen 15 eingegliedert.

Aus der Figur 2 ist femer erkennbar, dass in der Fahrposition der Abstand des Nackenkragens 6 des HANS-Systems 3 zur Verankerung 16 der Schultergurte 12 an der Rückwand 13 des Cockpits 2 vergleichsweise klein bemessen ist.

Im Crashfall gemäß Figur 3 verlagem sich sowohl der Oberkörper 7 als auch der Kopf des Rennfahrers 1 in Beschleunigungsrichtung BR, wobei sich der Abstand des Nackenkragens 6 zur Rückwand 13 vergrößert. Gleichzeitig werden die Haltebänder 9 gestrammt. Außerdem ist zu sehen, dass sich das Schulterjoch 4 relativ zum Oberkörper 7 verschiebt.

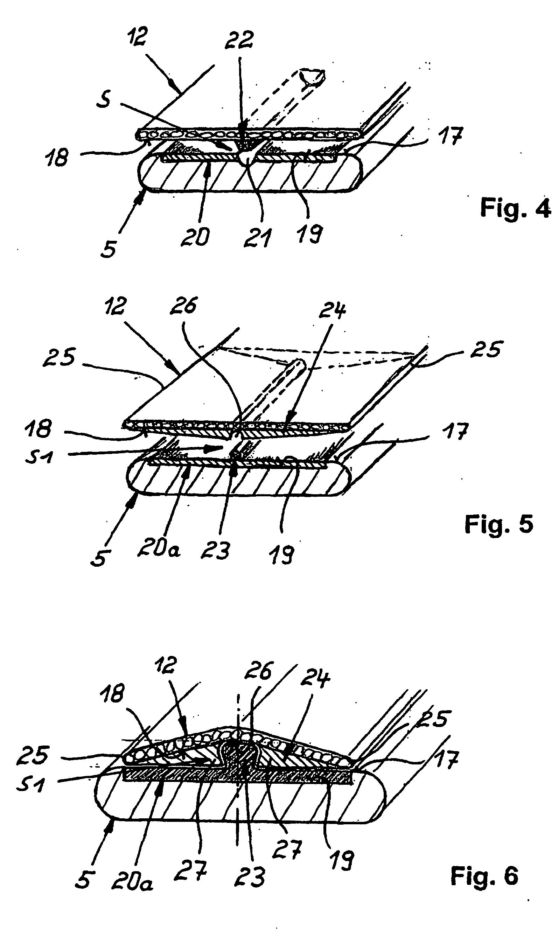

Die Oberseiten 17 der Schenkel 5 des Schulterjochs 4 bieten aufgrund von nachfolgend anhand der Figuren 4 bis 11 noch näher erläuterten speziellen Strukturierungen S, S1 - S4 den Unterseiten 18 der Schultergurte 12 einen erhöhten Friktionswiderstand, um einen bestimmten Kraftschluss zwischen den Schultergurten 12 und dem Schulterjoch 4 zu erzeugen. Dieser Kraftschluss soll verhindern, dass sich im Crashfall das Schulterjoch 4 zusammen mit dem Oberkörper 7 in unzulässiger Weise in Beschleunigungsrichtung BR verlagert. Das Schulterjoch 4 bleibt vielmehr relativ zum Oberkörper 7 in der Nähe der Rückwand 13 und zwar unter Strammung der Haltebänder 9.

In der Figur 4 sind ein Schenkel 5 des Schulterjochs 4 und ein Schultergurt 12 schematisch angedeutet. In die Oberseite 17 des Schenkels 5 ist eine kanalartige Vertiefung 19 eingearbeitet. In dieser Vertiefung 19 ist eine Flachleiste 20 mit einer mittigen gemuldeten Längsnut 21 verklebt. Die Flachleiste 20 besteht aus Gummi. An dem Schultergurt 12 ist auf der dem Schenkel 5 zugewandten Unterseite 18 ein gerundeter Längswulst 22 aus Kunststoff angespritzt, der von seinem Querschnitt her dem Querschnitt der Längsnut 21 entspricht. Ist der Schultergurt 12 über dem Schenkel 5 gestrammt, greift der Längswulst 22 in die Längsnut 21 ein, so dass einerseits eine Relativverlagerung in Längsrichtung von Schultergurt 12 und Schenkel 5 unter Friktionserhöhung gewährleistet ist, jedoch andererseits eine Querverlagerung durch den Eingriff des Längswulstes 22 in die Längsnut 21 verhindert wird.

Die zusammen wirkenden Strukturierungen S an den Schenkeln 5 und an den Schultergurten 12 werden also durch Längsnuten 21 in Flachleisten 20 und durch Längswulste 22 gebildet.

Bei der Ausführungsform der Figuren 5 und 6 sind ebenfalls ein Schenkel 5 des Schulterjochs 4 und ein Schultergurt 12 angedeutet. In die Oberseite 17 des Schenkels 5 ist eine kanalartige Vertiefung 19 eingearbeitet und in dieser ist eine Flachleiste 20a aus Gummi festgelegt, die mit einem mittigen, im Querschnitt omegaförmigen Längswulst 23 versehen ist. Auf der dem Schenkel 5 zugewandten Unterseite 18 des Schultergurts 12 ist eine Leiste 24 aus Kunststoff oder Gummi angebracht, die einen dreieckförmigen Querschnitt besitzt. Der Querschnitt weist in der vertikalen Mittellängsebene des Schultergurts 12 die größte Dicke auf und läuft in die Ränder 25 des Schultergurts 12 aus. In die Leiste 24 ist eine mittige gemuldete Längsnut 26 mit einem U-förmigen Querschnitt eingearbeitet.

Wird der Schultergurt 12 gemäß Figur 6 über den Schenkel 5 gestrammt, werden die Ränder 25 des Schultergurts 12 gegen die Flachleiste 20a gezogen, wobei sich die Bereiche 27 neben der Längsnut 26 formschlüssig um dem Längswulst 23 schmiegen, so dass dieser in der Längsnut 26 eingebettet ist.

Bei dieser Ausführungsform werden die zusammen wirkenden Strukturierungen S1 durch Flachleisten 20a mit Längswulsten 23 an den Schenkeln 5 und durch im Querschnitt dreieckige Leisten 24 mit Längsnuten 26 an den Schultergurten 12 gebildet.

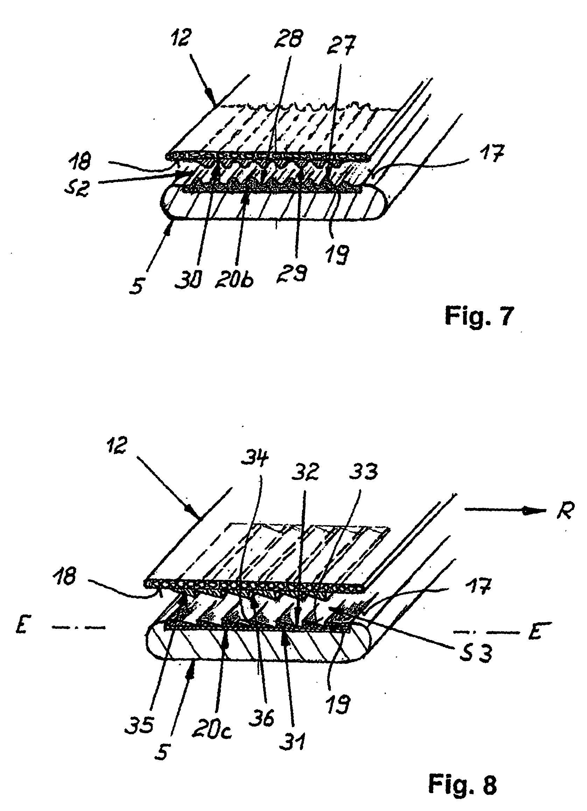

Im Rahmen der Ausführungsform der Figur 7 sind ein Schenkel 5 des Schulterjochs 4 und ein Schultergurt 12 angedeutet. In eine kanalartige Vertiefung 19 in der Oberseite 17 des Schenkels 5 ist wiederum eine Flachleiste 20b aus Gummi eingebettet, die mit mehreren parallel nebeneinander verlaufenden, gerundete bzw. gemuldete Querschnitte aufweisenden 1. Längswulsten 27 und 1. Längsnuten 28 versehen ist. An der dem Schenkel 5 zugewandten Unterseite 18 des Schultergurts 12 sind gerundete bzw. gemuldete Querschnitte aufweisende 2. Längswulste 29 und 2. Längsnuten 30 in gegengleicher Konfiguration zu den 1. Längswulsten 27 und 1. Längsnuten 28 am Schenkel 5 vorgesehen. Diese können aus Kunststoff bestehen und angespritzt sein.

Wird der Schultergurt 12 über den Schenkel 5 in Längsrichtung gestrammt, fassen die 1. Längswulste 27 an der Flachleiste 20b in die 2. Längsnuten 30 am Schultergurt 12 und die 2. Längswulste 29 am Schultergurt 12 in die 1. Längsnuten 28 an der Flachleiste 20b ein, so dass eine Querverlagerung des Schultergurts 12 relativ zum Schenkel 5 verhindert wird, jedoch die Längsverlagerung des Schultergurts 12 zum Schenkel 5 unter Friktionserhöhung sichergestellt bleibt.

Die zusammen wirkenden Strukturierungen S2 bei der Ausführungsform der Figur 7 werden demzufolge durch die 1. Längswulste 27 und 1. Längsnuten 28 an Flachleisten 20b der Schenkel 5 des Schulterjochs 4 sowie durch die 2. Längswulste 29 und 2. Längsnuten 30 an den Schultergurten 12 gebildet.

Die Ausführungsform der Figur 8 zeigt einen Schenkel 5 des Schulterjochs 4 und einen Schultergurt 12. In eine kanalartige Vertiefung 19 in der dem Schultergurt 12 zugewandten Oberseite 17 des Schenkels 5 ist eine Flachleiste 20c aus Gummi eingebettet. Diese Flachleiste 20c besitzt eine sägezahnartige Ausbildung aus 1. Längswulsten 31 und 1. Längsnuten 32 mit dreieckförmigen Querschnitten. Dadurch ergeben sich geneigt zu der Ebene E-E der Flachleiste 20c verlaufende Oberflächen 33 sowie Oberflächen 34, die sich im rechten Winkel zu dieser Ebene E-E erstrecken. Die sich im rechten Winkel zu der Ebene E-E erstreckenden Oberflächen 34 der 1. Längswulste 31 sind frontal zur zwischen den Schenkeln 5 des Schulterjochs 4 verlaufenden, vertikalen Mittellängsebene MLE hin gerichtet (siehe auch Figur 1).

Gegengleich zur sägezahnartigen Ausbildung am Schenkel 5 ist an der dem Schenkel 5 zugewandten Unterseite 18 des Schultergurts 12 ebenfalls eine sägezahnartige Ausbildung aus 2. Längswulsten 35 und 2. Längsnuten 36 dreieckförmigen Querschnitts gebildet. Diese können aus Kunststoff bestehen und angespritzt sein.

Wird der Schultergurt 12 über den Schenkel 5 in Längsrichtung gestrammt, fassen die 1. Längswulste 31 an der Flachleiste 20c in die 2. Längsnuten 36 am Schultergurt 12 und die 2. Längswulste 35 am Schultergurt 12 in die 1. Längsnuten 32 an der Flachleiste 20c ein.

Somit wird auch hierbei sichergestellt, dass sich jeder Schultergurt 12 in Längsrichtung zu einem Schenkel 5 unter Friktionserhöhung verlagem kann, jedoch eine Querverlagerung des Schultergurts 12 in die der vertikalen Mittellängsebene MLE des Schulterjochs 4 abgewandte Richtung R verhindert wird.

Die zusammen wirkenden Strukturierungen S3 der Ausführungsform gemäß Figur 8 werden folglich durch die 1. Längswulste 31 und 1. Längsnuten 32 an den Flachleisten 20c sowie durch die 2. Längswulste 35 und 2. Längsnuten 36 an den Schultergurten 12 gebildet.

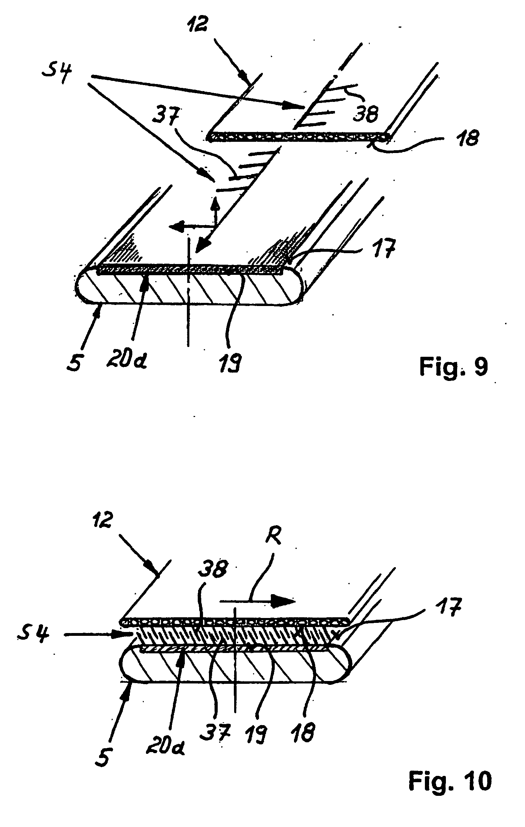

Im Umfang der Figuren 9 und 10 sind Strukturierungen S4 an einem Schenkel 5 des Schulterjochs 4 und an einem Schultergurt 12 gezeigt, die durch eine elektrostatisch aufgebrachte Beflockung gebildet werden.

Bei dem Beflocken werden Fasern 37, 38 durch ein elektrostatisches Feld gezielt so ausgerichtet, dass an einer Flachleiste 20d aus Kunststoff in einer kanalartigen Vertiefung 19 in der Oberseite 17 des Schenkels 5 erzeugte Fasern 37 sowohl zum Zentralverschluss 14 des Sicherheitsgurts als auch zur vertikalen Mittellängsebene MLE des Schulterjochs 4 hin gerichtet sind, während Fasern 38 an der dem Schenkel 5 zugewandten Unterseite 18 des Schultergurts 12 gegengleich geneigt sind.

Diese Gestaltung schafft ebenfalls die Voraussetzungen dafür, dass einerseits eine ausreichende Friktion bei einer Relativverlagerung der Schultergurte 12 zu den Schenkeln 5 in Längsrichtung erzielt wird, jedoch eine Querverlagerung in eine Richtung R unterbunden wird, die von der vertikalen Mittellängsebene MLE abgewandt ist.

Wird die Strammung des Schultergurts 12 über den Schenkel 5 aufgehoben, ist ein problemloses Trennen von Schultergurt 12 und Schenkel 5 gewährleistet.

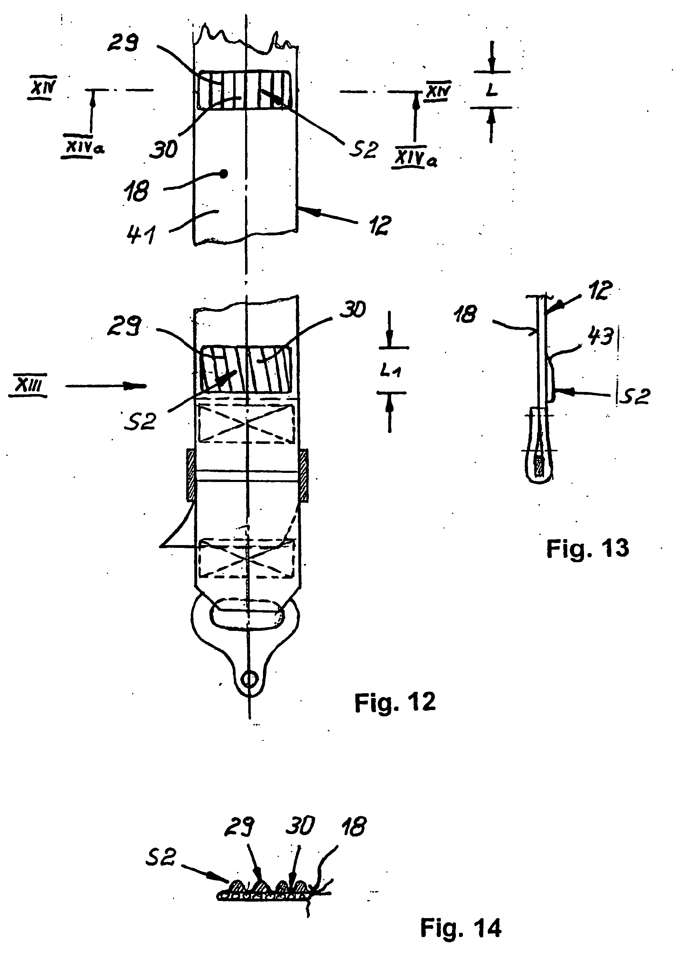

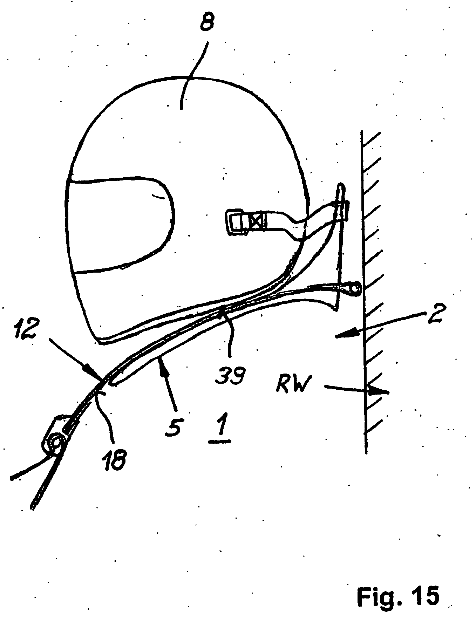

Die Figuren 11 bis 15 veranschaulichen eine Ausführungsform, welche bei einer fast liegenden Position des Rennfahrers 1 in einem Cockpit 2 vorteilhaft zum Tragen kommen soll. Hierbei liegt gemäß Figur 15 die Unterkante 39 des Sicherheitshelms 8 in den mittleren Längenbereichen 40, 41 der Schenkel 5 auf den Schultergurten 12. Folglich soll in diesen Bereichen 40, 41 der Schenkel 5 und der Schultergurte 12 keine Friktion stattfinden (Figuren 11 und 12). Vielmehr sind nur Strukturierungen S, S1 - S4 an den Oberseiten 17 der freien Enden 42 der Schenkel 5 sowie am Übergang von den Schenkeln 5 auf den Nackenkragen 6 des Schulterjochs 4 vorgesehen. Entsprechende Strukturierungen S, S1 - S4 finden sich an den den Schenkeln 5 zugewandten Unterseiten 18 der Schultergurte 12.

Bevorzugt gelangen Strukturierungen S2 gemäß Figur 14 in Form von gerundete Querschnitte aufweisenden Längswulsten 27, 29 und Längsnuten 28, 30 entsprechend Figur 7 zur Anwendung.

Die Strukturierungen S2 an den Schenkeln 5 und an den Schultergurten 12 sind jedoch gezielt derart gestaltet, dass Längswulste 27 und Längsnuten 28 an den freien Enden 42 der Schenkel 5 im Wesentlichen parallel zur vertikalen Mittellängsebene MLE des Schulterjochs 4 und Längswulste 27 sowie Längsnuten 28 am Übergang von den Schenkeln 5 auf den Nackenkragen 6 weitgehend parallel zu den Schenkeln 5 verlaufen. Benachbart des Nackenkragens 6 angeordnete Längswulste 29 und Längsnuten 30 an den Schultergurten 12 erstrecken sich parallel zur Längsrichtung der Schultergurte 12, während Längswulste 29 sowie Längsnuten 30 an den Schultergurten 12 benachbart der freien Enden 42 der Schenkel 5 sich im Winkel zur Längsrichtung der Schultergurte 12 erstrecken.

Auch lassen die Figuren 11 und 12 erkennen, dass die Längen L, L1 der Strukturierungen S2 an den Schultergurten 12 kürzer als die Längen L2, L3 der Strukturierungen S2 an den Schenkeln 5 bemessen sind.

Um das schienenartige Aufeinandergleiten der Strukturierungen S2 zu verbessern, ist gemäß Figur 13 vorgesehen, dass die Endabschnitte 43 der Strukturierungen S2 an den Schultergurten 12 geneigt, das heißt rampenartig ausgebildet sind.

### Bezugszeichenaufstellung:

- 1 -: Rennfahrer
- 2 -: Cockpit
- 3 -: HANS-System
- 4 -: Schulterjoch
- 5 -: Schenkel von 4
- 6 -: Nackenkragen von 4
- 7 -: Oberkörper von 1
- 8 -: Sicherheitshelm
- 9 -: Haltebänder von 3
- 10 -: Clipse für 9
- 11 -: Bandlose von 9
- 12 -: Schultergurte
- 13 -: Rückwand von 2
- 14 -: Zentralverschluss
- 15 -: Längenverstellungen in 12
- 16 -: Verankerung von 12
- 17 -: Oberseiten von 5
- 18 -: Unterseiten von 12
- 19 -: Vertiefung in 17
- 20 -: Flachleiste in 19
- 21 -: Längsnut in 20
- 22 -: Längswulst an 12
- 23 -: Längswulst an 20a
- 24 -: Leiste an 12
- 25 -: Ränder von 12
- 26 -: Längsnut in 24
- 27 -: 1. Längswulste an 20b
- 28 -: 1. Längsnuten an 20b
- 29 -: 2. Längswulste an 12
- 30 -: 2. Längsnuten an 12
- 31 -: 1. Längswulste an 20c
- 32 -: 1. Längsnuten an 20c
- 33 -: Oberflächen von 31
- 34 -: Oberflächen von 31
- 35 -: 2. Längswulste an 12
- 36 -: 2. Längsnuten an 12
- 37 -: Fasern an 20d
- 38 -: Fasern an 12
- 39 -: Unterkante von 8
- 40 -: Bereich von 5
- 41 -: Bereich von 12
- 42 -: freie Enden von 5
- 43 -: Endabschnitte von S2

- RW -: Rennwagen
- BR -: Beschleunigungsrichtung
- 20a -: Flachleiste
- 20b -: Flachleiste
- 20c -: Flachleiste
- 20d -: Flachleiste
- E-E -: Ebene von 20c
- MLE -: Mittellängsebene von 4
- R -: Richtung von 12
- L -: Länge von S2
- L1 -: Länge von S2
- L2 -: Länge von S2
- L3 -: Länge von S2

- S -: Strukturierungen aus 20, 21 und 22
- S1 -: Strukturierungen aus 20a, 23, 24 und 26
- S2 -: Strukturierungen aus 20b, 27, 28, 29, 30
- S3 -: Strukturierungen aus 20c, 31, 32, 35, 36
- S4 -: Strukturierungen aus 20d, 37, 38

## Patentansprüche

1. Anordnung mit einem Sicherheitsgurt und einem Schulterjoch zur Positionierung der längenverstellbaren Schultergurte (12) des Sicherheitsgurts in Längsrichtung von mit friktionserhöhenden Oberseiten (17) versehenen Schenkeln (5) des dem Oberkörper (7) eines Fahrzeuginsassens (1) in einem Rennwagen oder in einem Hubschrauber formschlüssig angepassten, formsteifen, U-förmigen Schulterjochs (4), das einen die Schenkel (5) verbindenden hochgestellten Nackenkragen (6) aufweist, wobei die Schultergurte (12) hinter dem Nackenkragen (6) örtlich fixiert und brustseitig des Fahrzeuginsassens (1) in einem Zentralverschluss (14) des Sicherheitsgurts zusammen geführt sind, **dadurch gekennzeichnet, dass** einerseits die den Schultergurten (12) zugewandten Oberseiten (17) der Schenkel (5) des Schulterjochs (4) und andererseits die den Schenkeln (5) zugewandten Unterseiten (18) der Schultergurte (12) mindestens bereichsweise mit eine Relativverlagerung der Schultergurte (12) zu den Schenkeln (5) in ihren Längsrichtungen unter Friktionserhöhung sicherstellenden, eine Querverlagerung jedoch unterbindenden Strukturierungen (S, S1 bis S4) versehen sind.

2. Anordnung nach Patentanspruch 1, **dadurch gekennzeichnet, dass** die Strukturierungen (S, S1 bis S3) aus mindestens einem Längswulst (22, 23, 27, 29, 31, 35) an jeder Oberseite (17) der Schenkel (5) oder jeder Unterseite (18) der Schultergurte (12) und aus einer an den Querschnitt des Längswulstes (22, 23, 27, 29, 31, 35) angepassten Längsnut (21, 26, 28, 30, 32, 36) an der jeweils gegenüber liegenden Unterseite (18) bzw. Oberseite (17) gebildet sind.

3. Anordnung nach Patentanspruch 1, **dadurch gekennzeichnet, dass** die Strukturierungen (S2, S3) aus in kanalartige Vertiefungen (19) der Schenkel (5) des Schulterjochs (4) eingebettete Flachleisten (20b, 20c) mit mehreren parallel nebeneinander verlaufenden 1. Längswulsten (27, 31) und 1. Längsnuten (28, 32) sowie aus an den Schultergurten (12) in gegengleicher Konfiguration vorgesehenen 2. Längswulsten (29, 35) und 2. Längsnuten (30, 36) gebildet sind.

4. Anordnung nach Patentanspruch 3, **dadurch gekennzeichnet, dass** die 1. und 2. Längswulste (27, 29) gewölbte Querschnitte und die 1. und 2. Längsnuten (28, 30) gemuldete Querschnitte aufweisen.

5. Anordnung nach Patentanspruch 3, **dadurch gekennzeichnet, dass** die 1. und 2. Längswulste (31, 35) sowie die 1. und 2. Längsnuten (32, 36) dreieckförmige Querschnitte mit einerseits geneigt zu den Ebenen (E-E) der Flachleisten (20c) verlaufenden Oberflächen (33) sowie mit andererseits zu den Ebenen (E-E) im rechten Winkel sich erstreckenden Oberflächen (34) aufweisen, wobei die sich im rechten Winkel zu den Ebenen (E-E) erstreckenden Oberflächen (34) der an den Schenkeln (5) vorgesehenen 1. Längswulste (31) frontal zur zwischen den Schenkeln (5) verlaufenden vertikalen Mittellängsebene (MLE) des Schulterjochs (4) hin gerichtet sind.

6. Anordnung nach Patentanspruch 1 oder 2, **dadurch gekennzeichnet, dass** die Strukturierungen (S) aus in kanalartige Vertiefungen (19) der Schenkel (5) des Schulterjochs (4) eingebettete Flachleisten (20) mit jeweils einer mittigen Längsnut (21) und aus an den Schultergurten (12) vorgesehenen, an die Längsnuten (21) angepassten Längswulsten (22) gebildet sind.

7. Anordnung nach Patentanspruch 1 oder 2, **dadurch gekennzeichnet, dass** die Strukturierungen (S1) aus in kanalartige Vertiefungen (19) der Schenkel (5) des Schulterjochs (4) eingebettete Flachleisten (20a) mit mittigen, im Querschnitt omegaförmig konfigurierten Längswulsten (23) und aus an den Schultergurten (12) vorgesehenen, im Querschnitt dreieckförmig gestalteten Leisten (24) mit mittigen Längsnuten (26) gebildet sind.

8. Anordnung nach Patentanspruch 1, **dadurch gekennzeichnet, dass** die Strukturierungen (S4) an den Schultergurten (12) und an den Schenkeln (5) des Schulterjochs (4) aus einer Vielzahl durch Beflockung aufgebrachter Fasern (37, 38) gebildet sind, wobei die Fasern (37) auf den Schenkeln (5) sowohl zum Zentralverschluss (14) des Sicherheitsgurts als auch zur vertikalen Mittellängsebene (MLE) des Schulterjochs (4) hin und die Fasern (38) an den Schultergurten (12) gegensinnig geneigt sind.

9. Anordnung nach Patentanspruch 8, **dadurch gekennzeichnet, dass** die Fasern (37) an den Schenkeln (5) auf in kanalartige Vertiefungen (19) der Schenkel (5) eingebetteten Flachleisten (20d) vorgesehen sind.

10. Anordnung nach einem der Patentansprüche 1 bis 7, **dadurch gekennzeichnet, dass** die Strukturierungen (S2) in Form von Längswulsten (27, 29) und Längsnuten (28, 30) in Längsrichtung der Schenkel (5) sowie der Schultergurte (12) bereichsweise zueinander versetzt sind, wobei Längswulste (27) und Längsnuten (28) an den freien Enden (42) der Schenkel (5) im wesentlichen parallel zur vertikalen Mittellängsebene (MLE) des Schulterjochs (4) und Längswulste (27) sowie Längsnuten (28) am Übergang von den Schenkeln (5) auf den Nackenkragen (6) weitgehend parallel zu den Schenkeln (5) verlaufen, während benachbart des Nackenkragens (6) angeordnete Längswulste (29) und Längsnuten (30) an den Schultergurten (12) sich parallel zur Längsrichtung der Schultergurte (12) und Längswulste (29) sowie Längsnuten (30) an den Schultergurten (12) benachbart der freien Enden (42) der Schenkel (5) sich im Winkel zur Längsrichtung der Schultergurte (12) erstrecken.

11. Anordnung nach Patentanspruch 10, **dadurch gekennzeichnet, dass** die Längen (L, L1) der Strukturierungen (S2) an den Schultergurten (12) kürzer als die Längen (L2, L3) der Strukturierungen (S2) an den Schenkeln (5) bemessen sind.

12. Anordnung nach Patentanspruch 10 oder 11, **dadurch gekennzeichnet, dass** die Endabschnitte (43) der Strukturierungen (S2) an den Schultergurten (12) geneigt ausgebildet sind.

13. Anordnung nach einem der Patentansprüche 1 bis 7 oder 10 bis 12, **dadurch gekennzeichnet, dass** die Strukturierungen (S, S1 bis S3) an den Schenkeln (5) durch Strangpressprofile aus Gummi oder Kunststoff gebildet sind.

14. Anordnung nach einem der Patentansprüche 1 bis 7 oder 10 bis 12, **dadurch gekennzeichnet, dass** die Strukturierungen (S, S1 bis S3) an den Schultergurten (12) aus angespritztem Kunststoff bestehen.

15. Anordnung nach einem der Patentansprüche 1 bis 7 oder 10 bis 12, **dadurch gekennzeichnet, dass** die Struktierungen (S, S1 bis S3) aus mit den Schultergurten (12) vernähten Profilsträngen bestehen.

16. Anordnung nach einem der Patentansprüche 1 bis 7 oder 10 bis 12, **dadurch gekennzeichnet, dass** die Strukturierungen (S, S1 bis S3) aus mit den Schultergurten (12) verklebten Profilsträngen bestehen.

## Claims

1. System with a safety belt and a shoulder yoke for positioning the length-adjustable shoulder belts (12) of the safety belt in the longitudinal direction of legs (5), which are provided with friction-increasing upper sides (17), of the dimensionally stiff U-shaped shoulder yoke (4), which is matched in a form-fitting manner to the upper body (7) of a vehicle occupant (1) in a racing vehicle or in a helicopter and which has a raised neck collar (6) connecting the legs (5), the shoulder belts (12) being fixed locally behind the neck collar (6) and being brought together in a central closure (14) of the safety belt on the chest side of the vehicle occupant (1), **characterized in that**, on the one hand, the upper sides (17) of the legs (5) of the shoulder yoke (4), which upper sides face the shoulder belts (12), and, on the other hand, the lower sides (18) of the shoulder belts (12), which lower sides face the legs (5), are provided at least in some regions with structures (S, S1 to S4) which ensure a displacement of the shoulder belts (12) relative to the legs (5) in their longitudinal directions with an increase in friction, but prevent a transverse displacement.

2. System according to Patent Claim 1, **characterized in that** the structures (S, S1 to S3) are formed from at least one longitudinal bead (22, 23, 27, 29, 31, 35) on each upper side (17) of the legs (5) or each lower side (18) of the shoulder belts (12) and from a longitudinal groove (21, 26, 28, 30, 32, 36), which is matched to the cross section of the longitudinal bead (22, 23, 27, 29, 31, 35), on the respectively opposite lower side (18) or upper side (17).

3. System according to Patent Claim 1, **characterized in that** the structures (S2, S3) are formed from flat strips (20b, 20c), which are embedded in channel-like depressions (19) of the legs (5) of the shoulder yoke (4), with a plurality of first longitudinal beads (27, 31) running parallel to one another, and of first longitudinal grooves (28, 32) and from second longitudinal beads (29, 35), which are provided in a diametrically opposed configuration on the shoulder belts (12), and second longitudinal grooves (30, 36).

4. System according to Patent Claim 3, **characterized in that** the first and second longitudinal beads (27, 29) have curved cross sections and the first and second longitudinal grooves (28, 30) have recessed cross sections.

5. System according to Patent Claim 3, **characterized in that** the first and second longitudinal beads (31, 35) and the first and second longitudinal grooves (32, 36) have triangular cross sections with, on the one hand, surfaces (33) running in an inclined manner with respect to the planes (E-E) of the flat strips (20c), and with, on the other hand, surfaces (34) extending at right angles to the planes (E-E), with those surfaces (34), which extend at right angles to the planes (E-E), of the first longitudinal beads (31) provided on the legs (5) being directed frontally to the vertical central longitudinal plane (MLE) of the shoulder yoke (4), which plane runs between the legs (5).

6. System according to Patent Claim 1 or 2, **characterized in that** the structures (S) are formed from flat strips (20), which are embedded in channel-like depressions (19) of the legs (5) of the shoulder yoke (4) and have a respective central longitudinal groove (21), and from longitudinal beads (22), which are provided on the shoulder belts (12) and are matched to the longitudinal grooves (21).

7. System according to Patent Claim 1 or 2, **characterized in that** the structures (S1) are formed from flat strips (20a) which are embedded in channel-like depressions (19) of the legs (5) of the shoulder yoke (4) and have central longitudinal beads (23) of omega-shaped configuration in cross section, and from strips (24) which are provided on the shoulder belts (12), are of triangular design in cross section and have central longitudinal grooves (26).

8. System according to Patent Claim 1, **characterized in that** the structures (S4) on the shoulder belts (12) and on the legs (5) of the shoulder yoke (4) are formed form a multiplicity of fibres (37, 38) applied by flocking, the fibres (37) on the legs (5) being inclined both towards the central closure (14) of the safety belt and also towards the vertical central longitudinal plane (MLE) of the shoulder yoke (4) and the fibres (38) on the shoulder belts (12) being inclined in the opposite direction.

9. System according to Patent Claim 8, **characterized in that** the fibres (37) on the legs (5) are provided on flat strips (20d) embedded into channel-like depressions (19) of the legs (5).

10. System according to one of Patent Claims 1 to 7, **characterized in that** the structures (S2) in the form of longitudinal beads (27, 29) and longitudinal grooves (28, 30) are offset in some regions with respect to one another in the longitudinal direction of the legs (5) and of the shoulder belts (12), with the longitudinal beads (27) and longitudinal grooves (28) at the free ends (42) of the legs (5) running essentially parallel to the vertical central longitudinal plane (MLE) of the shoulder yoke (4), and longitudinal beads (27) and longitudinal grooves (28) at the transition from the legs (5) to the neck collar (6) running largely parallel to the legs (5) while longitudinal beads (29) and longitudinal grooves (30) on the shoulder belts (12), which longitudinal beads and longitudinal grooves are arranged adjacent to the neck collar (6), extend parallel to the longitudinal direction of the shoulder belts (12), and longitudinal beads (29) and longitudinal grooves (30) on the shoulder belts (12) adjacent to the free ends (42) of the legs (5) extend at an angle to the longitudinal direction of the shoulder belts (12).

11. System according to Patent Claim 10, **characterized in that** the lengths (L, L1) of the structures (S2) on the shoulder belts (12) are dimensioned such that they are shorter than the lengths (L2, L3) of the structures (S2) on the legs (5).

12. System according to Patent Claim 10 or 11, **characterized in that** the end sections (43) of the structures (S2) on the shoulder belts (12) are of inclined design.

13. System according to one of Patent Claims 1 to 7 or 10 to 12, **characterized in that** the structures (S, S1 to S3) on the legs (5) are formed by extruded profiles of rubber or of plastic.

14. System according to one of Patent Claims 1 to 7 or 10 to 12, **characterized in that** the structures (S, S1 to S3) on the shoulder belts (12) are composed of sprayed-on plastic.

15. System according to one of Patent Claims 1 to 7 or 10 to 12, **characterized in that** the structures (S, S1 to S3) are composed of profiled strands sewn to the shoulder belts (12).

16. System according to one of Patent Claims 1 to 7 or 10 to 12, **characterized in that** the structures (S, S1 to S3) are composed of profiled strands adhesively bonded to the shoulder belts (12).

## Revendications

1. Système doté d'une ceinture de sécurité et d'un joug thoracique, pour le positionnement des ceintures thoraciques (12) réglables en longueur de la ceinture de sécurité dans la direction longitudinale de branches (5), pourvues de côtés supérieurs (17) augmentant la friction, du joug thoracique (4) en forme de U, indéformable, adapté par coopération de formes au corps supérieur (7) d'un passager de véhicule (1) dans une voiture de course ou dans un hélicoptère, lequel joug thoracique comprend un collet pour la nuque (6) réglé à un niveau élevé reliant les branches (5), les ceintures thoraciques (12) étant fixées localement derrière le collet pour la nuque (6) et guidées conjointement côté poitrine du passager du véhicule (1) dans une fermeture centrale (14) de la ceinture de sécurité, **caractérisé en ce que** d'une part, les côtés supérieurs (17), tournés vers les ceintures thoraciques (12), des branches (5) du joug thoracique (4) et d'autre part les côtés inférieurs (18), tournés vers les branches (5), des ceintures thoraciques (12) sont pourvus, au moins par endroits, de structurations (S, S1 à S4) garantissant un déplacement relatif des ceintures thoraciques (12) par rapport aux branches (5) dans leurs directions longitudinales sous une augmentation de la friction, bloquant cependant un déplacement transversal.

2. Système selon la revendication 1, **caractérisé en ce que** les structurations (S, S1 à S3) sont formées d'au moins un bourrelet longitudinal (22, 23, 27, 29, 31, 35) sur chaque côté supérieur (17) des branches (5) ou chaque côté inférieur (18) des ceintures thoraciques (12) et d'une rainure longitudinale (21, 26, 28, 30, 32, 36) adaptée à la section transversale du bourrelet longitudinal (22, 23, 27, 29, 31; 35), sur le côté inférieur (18) et/ou le côté supérieur (17) respectivement opposés.

3. Système selon la revendication 1, **caractérisé en ce que** les structurations (S2, S3) sont formées de bandes plates (20b, 20c) encastrées dans des creux du type canal (19) des branches (5) du joug thoracique (4), et dotées de plusieurs premiers bourrelets longitudinaux (27, 31) et de premières rainures longitudinales (28, 32) s'étendant parallèlement les uns aux autres, ainsi que de seconds bourrelets longitudinaux (29, 35) et secondes rainures longitudinales (30, 36) prévus sur les ceintures thoraciques (12) dans une configuration opposée.

4. Système selon la revendication 3, **caractérisé en ce que** les premiers et seconds bourrelets longitudinaux (27, 29) comprennent des sections transversales bombées et les premières et secondes rainures longitudinales (28, 30) comprennent des sections transversales incurvées.

5. Système selon la revendication 3, **caractérisé en ce que** les premiers et seconds bourrelets longitudinaux (31, 35) ainsi que les premières et secondes rainures longitudinales (32, 36) comprennent des sections transversales triangulaires dotées, d'une part, de surfaces (33) s'étendant de façon oblique par rapport aux plans (E-E) des bandes plates (20c), ainsi que d'autre part, de surfaces (34) s'étendant à angle droit par rapport aux plans (E-E), les surfaces (34) des premiers bourrelets longitudinaux (31) prévus sur les branches (5) qui s'étendent à angle droit par rapport aux plans (E-E) étant orientées de manière frontale en direction du plan longitudinal central (MLE) vertical du joug thoracique (4) s'étendant entre les branches (5).

6. Système selon la revendication 1 ou 2, **caractérisé en ce que** les structurations (S) sont formées de bandes plates (20) encastrées dans des creux du type canal (19) des branches (5) du joug thoracique (4), et dotées respectivement d'une rainure longitudinale centrale (21), et de bourrelets longitudinaux (22) prévus sur les ceintures thoraciques (12), et adaptés aux rainures longitudinales (21).

7. Système selon la revendication 1 ou 2, **caractérisé en ce que** les structurations (S1) sont formées de bandes plates (20a) encastrées dans des creux du type canal (19) des branches (5) du joug thoracique (4), et dotées de bourrelets longitudinaux (23) configurés en forme d'oméga en section transversale, et de bandes (24) dotées de rainures longitudinales centrales (26), configurées avec une section transversale triangulaire, prévues sur les ceintures thoraciques (12).

8. Système selon la revendication 1, **caractérisé en ce que** les structurations (S4) sur les ceintures thoraciques (12) et sur les branches (5) du joug thoracique (4) sont formées d'une pluralité de fibres (37, 38) appliquées par flocage, les fibres (37) étant inclinées sur les branches (5) ainsi qu'en direction de la fermeture centrale (14) de la ceinture de sécurité ainsi qu'en direction du plan longitudinal central (MLE) vertical du joug thoracique (4) et les fibres (38) étant inclinées sur les ceintures thoraciques (12) en sens inverse.

9. Système selon la revendication 8, **caractérisé en ce que** les fibres (37) sur les branches (5) sont prévues sur des bandes plates (20d) encastrées dans des creux du type canal (19) des branches (5).

10. Système selon l'une quelconque des revendications 1 à 7, **caractérisé en ce que** les structurations (S2) sous forme de bourrelets longitudinaux (27, 29) et de rainures longitudinales (28, 30) sont décalées les unes par rapport aux autres par endroits dans la direction longitudinale des branches (5) ainsi que des ceintures thoraciques (12), les bourrelets longitudinaux (27) et les rainures longitudinales (28) sur les extrémités libres (42) des branches (5) s'étendant sensiblement parallèlement au plan longitudinal central (MLE) vertical du joug thoracique (4) et les bourrelets longitudinaux (27) ainsi que les rainures longitudinales (28), au niveau du passage des branches (5) au collet pour la nuque (6), s'étendant dans la largeur parallèlement aux branches (5), tandis que les bourrelets longitudinaux (29) et les rainures longitudinales (30) disposés au voisinage du collet pour la nuque (6) s'étendent sur les ceintures thoraciques (12) parallèlement à la direction longitudinale des ceintures thoraciques (12), et les bourrelets longitudinaux (29) ainsi que les rainures longitudinales (30) sur les ceintures thoraciques (12) au voisinage des extrémités libres (42) des branches (5) s'étendent en formant un angle par rapport à la direction longitudinale des ceintures thoraciques (12).

11. Système selon la revendication 1, **caractérisé en ce que** les longueurs (L, L1) des structurations (S2) sur les ceintures thoraciques (12) sont dimensionnées en étant plus courtes que les longueurs (L2, L3) des structurations (S2) sur les branches (5).

12. Système selon la revendication 10 ou 11, **caractérisé en ce que** les extrémités (43) des structurations (S2) sur les ceintures thoraciques (12) sont conçues de façon inclinée.

13. Système selon l'une quelconque des revendications 1 à 7 ou 10 à 12, **caractérisé en ce que** les structurations (S, S1 à S3) sur les branches (5) sont formées par des profilés extrudés en caoutchouc ou en matière plastique.

14. Système selon l'une quelconque des revendications 1 à 7 ou 10 à 12, **caractérisé en ce que** les structurations (S, S1 à S3) sur les ceintures thoraciques (12) sont constituées d'une matière plastique directement injectée.

15. Système selon l'une quelconque des revendications 1 à 7 ou 10 à 12, **caractérisé en ce que** les structurations (S, S1 à S3) sont constituées d'extrudés profilés cousus aux ceintures thoraciques (12).

16. Système selon l'une quelconque des revendications 1 à 7 ou 10 à 12, **caractérisé en ce que** les structurations (S, S1 à S3) sont constituées d'extrudés profilés collés aux ceintures thoraciques (12).
